# EUROPEAN PATENT APPLICATION

(11) **EP 4 663 026 A1**
(43) Date of publication of application: **17.12.2025**
(21) Application number: 24753170.0
(22) Date of filing: 29.01.2024
(51) Int. Cl.: A23L 27/00, A23F 3/16, A23L 2/00, A23L 2/56, A23L 5/00

(54) **SOLID COMPOSITION HAVING SWEET FRAGRANT AROMA**

(30) Priority: 06.02.2023 JP 2023016259
(71) Applicant: Suntory Holdings Limited, Osaka-shi, Osaka 530-8203 (JP)
(72) Inventor: HAMABA, Taishu, Kawasaki-shi, Kanagawa 211-0067 (JP); OSANAI, Taisuke, Soraku-gun, Kyoto 619-0284 (JP)
(74) Representative: Vossius & Partner Patentanwälte Rechtsanwälte mbB
(86) International application number: PCT/JP2024/002622
(87) International publication number: WO 2024/166726

(57) **Abstract**

The purpose of the present invention is to provide a solid composition having a sweet and roasty aroma. In this solid composition, 2,6-dimethylpyrazine and maltol are included, and the weight ratio of a 2,6-dimethylpyrazine content to a maltol content is adjusted to 3.3 or less.

## Description

### TECHNICAL FIELD

The present invention relates to a solid composition, and more specifically to a solid composition having a sweet and roasty aroma.

### BACKGROUND ART

Tea beverages obtained by processing tea leaves are widely consumed not only in Japan but also around the world. Tea beverages are sold as beverages filled in sterilized containers such as PET bottles and cans, or are sold in powder form by drying and powdering, and the resulting powder is dissolved in water or hot water for drinking. There are two major types of powdery tea for drinking with water or hot water. One is instant tea, which is obtained by drying a tea leaf extract, and the other is powdered tea, which is obtained by crushing tea leaves as they are.

For the instant tea, technologies for improving the flavor of tea have been disclosed. For example, disclosed is an instant tea obtained by multiple operations of extraction from the same tea source material during the production of tea leaf extract (Patent Literature 1). Also disclosed is an instant tea with reduced caffeine content by purifying a green tea extract by using a mixed solution containing ethanol and water at a specific ratio (Patent Literature 2), etc. Further disclosed is instant tea that utilizes monosaccharides or disaccharides such as glucose and maltose to suppress flavor degradation over time (Patent Literature 3). With regard to the powdered tea, in order to improve dispersibility and solubility in water, for example, disclosed is a powdered tea obtained by dispersing crushed tea leaves in a plant extract solution and then spray-drying the dispersed solution (Patent Literature 4). Also disclosed is a powdered tea mainly consisting of crushed tea leaves obtained by crushing and atomizing in an aqueous solution (Patent Literature 5), etc.

Since people have a desire to relax by drinking tea beverages, a sweet and roasty aroma has been sought in terms of flavor. As a method of making a tea beverage sweet and roasty, for example, a flavor-improving agent is known to impart an unconventional refreshingly bitter, sweet, and roasty rich flavor, unique to matcha, to matcha-containing beverages (Patent Literature 6). Also known is a technique for making a barley tea beverage sweet and roasty (Patent Literatures 7 and 8). Further, a method is known to add a sweet and roasty aroma peculiar to tencha (unmilled matcha leaves) (Patent Literature 9).

### CITATION LIST

### PATENT LITERATURE

PTL 1: Japanese Patent Laid-Open No. 2013-226111
PTL 2: Japanese Patent Laid-Open No. 2009-72188
PTL 3: Japanese Patent Laid-Open No. 2013-153739
PTL 4: Japanese Patent Laid-Open No. 2010-233559
PTL 5: Japanese Patent Laid-Open No. 2007-289115
PTL 6: Japanese Patent Laid-Open No. 2017-79668
PTL 7: Japanese Patent Laid-Open No. 2018-174743
PTL 8: Japanese Patent Laid-Open No. 2012-170375
PTL 9: Japanese Patent Laid-Open No. 2013-223441

### SUMMARY OF INVENTION

### TECHNICAL PROBLEM

As described above, several methods for making a tea beverage sweet and roasty have been reported. In the field of tea beverages, there is a need for further technology on how to make them sweet and roasty. Here, the purpose of the present invention is to provide a solid composition having a sweet and roasty aroma.

### SOLUTION TO PROBLEM

The present inventors have conducted intensive research to solve the above-mentioned problems, and as a result, have found that a sweet and roasty aroma like that of high-grade tea can be felt by adjusting the content ratio between maltol and 2,6-dimethylpyrazine in a solid composition to a specific range. Based on these findings, the present invention has been completed by the present inventors.

The present invention pertains to, but is not limited to, the following items.
(1) A solid composition including 2,6-dimethylpyrazine and maltol, wherein a weight ratio of a 2,6-dimethylpyrazine content to a maltol content is 3.3 or less.
(2) The composition according to (1), which is a powdery composition.
(3) The composition according to (1) or (2), including two or more types of dextrins.
(4) The composition according to (3), including a linear dextrin and a cyclic dextrin.
(5) The composition according to any one of (1) to (4), including a tea leaf extract.
(6) The composition according to (5), wherein the tea leaf extract is a tea leaf extract of green tea.
(7) The composition according to any one of (1) to (6), including an ingredient other than tea.
(8) The composition according to any one of (1) to (7), including an antioxidant.
(9) A food or drink including the composition according to any one of (1) to (8).
(10) The food or drink according to (9), which is a beverage.
(11) The food or drink according to (9), which is a tea beverage.

### ADVANTAGEOUS EFFECTS OF INVENTION

The present invention can provide a solid composition having a sweet and roasty aroma. The solid composition of the present invention can be made into a tea beverage by using water or hot water, and can bring about a sweet and roasty aroma during drinking of the tea beverage. The solid composition of the present invention is extremely lightweight relative to tea beverages, making it extremely convenient for transportation.

The solid composition of the present invention may also be used as a raw material for food products. The number and variety of tea-flavored foods have been increasing in recent years. The solid composition of the present invention can impart a sweet and roasty aroma to confectioneries such as cakes, sponge cakes, candies, cookies, jellies, puddings, and chocolates, for example.

### DESCRIPTION OF EMBODIMENTS

The solid composition of the present invention will be described below. Note that unless otherwise specified, "ppm", "ppb", and "wt%" used herein mean ppm, ppb, and wt% represented in weight/weight (w/w), respectively.

An embodiment of the present invention is a solid composition including 2,6-dimethylpyrazine and maltol, wherein a weight ratio of the 2,6-dimethylpyrazine content to the maltol content is 3.3 or less. Such a configuration may be adopted to present a sweet and roasty aroma from the solid composition. As used herein, the sweet and roasty aroma presented by the solid composition is also referred to as "roasty aroma" in the field of tea beverages.

### (2,6-Dimethylpyrazine and maltol)

The solid composition of the present invention contains 2,6-dimethylpyrazine. 2,6-Dimethylpyrazine is a kind of pyrazines and is known to have a nut-like aroma. 2,6-Dimethylpyrazine is an organic compound represented by the chemical formula C₆H₈N₂ and its CAS number is 5910-89-4.

The solid composition of the present invention contains maltol. Maltol is an organic compound that occurs naturally in pine needles and others, and is used as a food flavoring agent or food additive, and is known to have a sweet aroma. Maltol is an organic compound represented by the chemical formula C₆H₆O₃, and its CAS number is 118-71-8.

In the solid composition of the present invention, the weight ratio of the 2,6-dimethylpyrazine content to the maltol content is 3.3 or less. Here, 2,6-dimethylpyrazine and maltol may be combined and present at the above weight ratio to elicit a caramel-like sweet and roasty aroma.

The weight ratio of the 2,6-dimethylpyrazine content to the maltol content in the solid composition of the present invention is preferably 0.001 or more, 0.002 or more, 0.003 or more, 0.004 or more, 0.005 or more, 0.006 or more, 0.007 or more, or 0.008 or more and more preferably 0.01 or more. In addition, the weight ratio of the 2,6-dimethylpyrazine content to the maltol content in the solid composition of the present invention is preferably 3.25 or less, 3.2 or less, 3.15 or less, 3.1 or less, 3.05 or less, 3.0 or less, 2.95 or less, or 2.9 or less, and more preferably 2.0 or less, 1.5 or less, or 1.0 or less. Typically, the weight ratio of the 2,6-dimethylpyrazine content to the maltol content in the solid composition of the present invention is preferably 0.001 to 3.25, more preferably 0.002 to 3.2, and still more preferably 0.003 to 3.15.

The content of 2,6-dimethylpyrazine in the solid composition of the present invention is not particularly limited, but is, for example, 10 ppb or more, preferably 20 ppb or more, 30 ppb or more, 40 ppb or more, 50 ppb or more, 60 ppb or more, 70 ppb or more, 80 ppb or more, 90 ppb or more, 100 ppb or more, or 110 ppb or more. The content of 2,6-dimethylpyrazine within the above range tends to make a sweet and roasty aroma felt particularly sufficient. The upper limit of the content of 2,6-dimethylpyrazine in the solid composition is not particularly limited. The content is, for example, 9000 ppb or less, preferably 8500 ppb or less, 8000 ppb or less, 7500 ppb or less, 7000 ppb or less, 6500 ppb or less, 6000 ppb or less, 5500 ppb or less, 5000 ppb or less, 4500 ppb or less, or 4000 ppb or less. The content of 2,6-dimethylpyrazine in the solid composition of the present invention is not particularly limited, but typically ranges from 10 to 9000 ppb, preferably from 20 to 8500 ppb, more preferably from 30 to 8000 ppb, and still more preferably from 40 to 7500 ppb.

The content of maltol in the solid composition of the present invention is not particularly limited, but is, for example, 5.0 ppm or more, preferably 5.5 ppm or more, 6.0 ppm or more, 6.5 ppm or more, 7.0 ppm or more, 7.5 ppm or more, 8.0 ppm or more, 8.5 ppm or more, 9.0 ppm or more, 9.5 ppm or more, or 10 ppm or more, and more preferably 15 ppm or more, or 20 ppm or more. The maltol content within the above range tends to make a sweet and roasty aroma felt particularly sufficient. The upper limit of the maltol content in the solid composition is not particularly limited. The content is, for example, 1000 ppm or less, preferably 950 ppm or less, 900 ppm or less, 850 ppm or less, 800 ppm or less, 750 ppm or less, 700 ppm or less, 650 ppm or less, 600 ppm or less, 550 ppm or less, or 500 ppm or less. The content of maltol in the solid composition of the present invention is not particularly limited, but is typically 5.0 to 1000 ppm, preferably 5.5 to 950 ppm, more preferably 6.0 to 900 ppm, and still more preferably 6.5 to 850 ppm.

In the solid composition of the present invention, 2,6-dimethylpyrazine and maltol may be used as purified or crude purified products, respectively, or an extract containing 2,6-dimethylpyrazine and maltol may be used. The extract containing 2,6-dimethylpyrazine and maltol may be a naturally occurring extract, and any of a plant extract or an animal extract may be used. Here, 2,6-dimethylpyrazine and maltol may be derived from tea leaf extracts as described below.

In the present invention, the contents of 2,6-dimethylpyrazine and maltol in the solid composition may be determined using gas chromatography mass spectrometry (GC/MS). Examples of the analyzer include GC: Agilent Technologies 7890B GC and MS: Agilent Technologies 5977A. A solution obtained by dissolving the solid composition of the present invention in water may be prepared, and the content of each aromatic component may then be measured using the solution. The content of 2,6-dimethylpyrazine or maltol may be specifically determined under the conditions shown in the Examples below. The conditions for each sample for measurement may also be set as indicated in the Examples below. The content of each aromatic component in the solution may be measured, and the content of the aromatic component in the solid composition can be calculated backward from the amount of solid composition dissolved in water.

The solid composition of the present invention may contain a tea leaf extract. As used herein, the "tea leaf extract" means components extracted from tea leaves. The tea leaves used in the present invention may be leaves obtained from plants of the family *Theaceae*, the genus *Camellia* (e.g., *Camellia sinensis* (L) O. Kuntze). The tea leaves used in this invention can be classified into unfermented tea, semi-fermented tea, and fermented tea according to the processing method. Examples of the non-fermented tea include green teas such as aracha (unrefined green tea), sencha (steamed green tea), gyokuro (shaded green tea), kabusecha (covered green tea), tencha (unmilled matcha leaves), bancha (coarse green tea), hojicha (roasted green tea), kamairicha (pan-fired green tea), kukicha (stem tea), boucha (stem-roasted tea), and mecha (bud tea). Examples of the semi-fermented tea include Chinese oolong teas such as Tieguanyin (Iron Goddess of Mercy), Sezhong varietals, Huangjin Gui (Golden Osmanthus), and Wuyi Rock Tea (Yancha). Examples of the fermented tea include black teas such as Darjeeling, Assam, and Ceylon. In the present invention, only one type of tea leaves may be used singly, or a blend of several types of tea leaves may be used. The tea leaves are not particularly limited as long as the aromatic components can be extracted from their parts. Leaves, stems, etc., may be used if appropriate, and their forms are not limited to large leaves, powdery leaves, etc. In the present invention, any green tea leaf extract is preferably used without any particular limitation, and a sencha or bancha tea leaf extract is more preferably used. In addition, examples of the tea flush include first flush (Ichibancha), second flush (Nibancha), third flush (Sanbancha), fourth flush (Yonbancha), autumn-winter flush, winter-spring flush, winter-spring-autumn flush, and regrowth harvest (Kariban). Preferably, the present invention uses a tea leaf extract of autumn-winter flush. The autumn-winter flush tea is tea leaves picked in autumn and early winter in Japan. For example, tea leaves picked from late September to mid-October can be used. In addition, it is known that the autumn-winter flush tea is made from tea leaves that are pruned and processed during the period from autumn to early winter-when the growth of autumn shoots has ceased-to improve the sprouting conditions for the first flush tea. It is generally considered a lower grade tea (Japanese Tea Instructor Course, Vol. 1, 2018, pp. 174 and 183). Tea leaves used in the tea leaf extract are preferably roasted, and preferably roasted, for example, at 170°C or higher for 250 seconds or longer.

The content of tea leaf extract in the solid composition of the present invention is not particularly limited, but is, for example, 20 to 95 wt%, preferably 30 to 90 wt%, more preferably 35 to 80 wt%, and still more preferably 40 to 70 wt%. The content of tea leaf extract within the above range can make a tea leaf-derived aroma felt sufficient.

### (Dextrin)

The solid composition of the present invention may contain a dextrin. Dextrin is a generic term for carbohydrates obtained by hydrolysis of starch or glycogen. In the present invention, dextrin may be used as an excipient for forming the solid composition. The types of dextrin used in the solid composition of the present invention are not particularly limited, but may be one, two, three, or four or more types, preferably two or more types, and more preferably three or more types.

The content of each dextrin in the solid composition of the present invention is not particularly limited, but the total content of dextrins is, for example, 5 to 80 wt%, preferably 10 to 70 wt%, more preferably 20 to 65 wt%, and still more preferably 30 to 60 wt%. In the present invention, commercially available dextrin products may be used. The content of dextrin(s) in the solid composition may be determined by analyzing sugars while using methods known to those skilled in the art.

Examples of the dextrin used in the present invention include, but are not particularly limited to, a linear dextrin, a cyclic dextrin, and a helical dextrin. As used herein, the term "linear dextrin" means a dextrin in which glucose is linearly linked or linked like a chain while branched and the form is neither a cyclic nor helical structure. In addition, as used herein, the term "cyclic dextrin" means a dextrin in which glucose is bonded to form a ring structure and the form is not a helical structure. Further, as used herein, the term "helical dextrin" means a dextrin in which glucose is linked to form a helical structure. The solid composition of the present invention preferably contains a linear dextrin and/or a cyclic dextrin.

Examples of the linear dextrin that can be used include, but are not particularly limited to, a linear dextrin with a DE (dextrose equivalent) of 1 to 25 or a linear dextrin with a weight average molecular weight of 500 to 160000. Meanwhile, in the present invention, not only one but also two or more types of linear dextrins may be used in combination. In a preferred embodiment of the present invention, two types of linear dextrins are used. When two types of linear dextrins are used, it is possible to use, for example, a combination of a linear dextrin with a DE of 2 to 5 and a linear dextrin with a DE of 16 to 20 or a combination of a linear dextrin with a weight average molecular weight of 90000 to 140000 and a linear dextrin with a weight average molecular weight of 600 to 1200.

In the case of using a linear dextrin(s), the content of linear dextrin(s) in the solid composition of the present invention is, for example, 0 to 65 wt%, preferably 10 to 60 wt%, and more preferably 15 to 55 wt%. When two types of linear dextrins: a linear dextrin with a DE of 2 to 5 and a linear dextrin with a DE of 16 to 20 are used, the content of linear dextrin with a DE of 2 to 5 in the solid composition of the present invention is, for example, 0 to 60 wt%, preferably 5 to 50 wt%, and more preferably 10 to 45 wt%, and the content of linear dextrin with a DE of 16 to 20 is, for example, 0 to 60 wt%, preferably 5 to 50 wt%, and more preferably 10 to 45 wt%. In addition, the content ratio (weight ratio) between the linear dextrin with a DE of 2 to 5 and the linear dextrin with a DE of 16 to 20 is, for example, 4:0.5 to 0.5:5, preferably 3:1 to 1:5, and more preferably 2:1 to 1:4.

In addition, when two types of linear dextrins: a linear dextrin with a weight average molecular weight of 90000 to 140000 and a linear dextrin with a weight average molecular weight of 600 to 1200 are used, the content of linear dextrin with a weight average molecular weight of 90000 to 140000 in the solid composition of the present invention is, for example, 0 to 65 wt%, preferably 10 to 60 wt%, and more preferably 15 to 55 wt%, and the content of linear dextrin with a weight average molecular weight of 600 to 1200 is, for example, 5 to 60 wt%, preferably 5 to 50 wt%, and more preferably 10 to 45 wt%. Further, the content ratio (weight ratio) between the linear dextrin with a weight average molecular weight of 90000 to 140000 and the linear dextrin with a weight average molecular weight of 600 to 1200 is, for example, 5:1 to 1:3, preferably 3:1 to 1:2, and more preferably 2:1 to 1:1.

The cyclic dextrin used may be, for example, a cyclodextrin. In the present invention, α-cyclodextrin, β-cyclodextrin, and γ-cyclodextrin may all be used, but α-cyclodextrin is preferably used. The weight average molecular weight of cyclic dextrin used in the present invention is not particularly limited, but is, for example, 700 to 1300, preferably 800 to 1200, and more preferably 900 to 1100. In the case of using a cyclic dextrin(s), the content of cyclic dextrin(s) in the solid composition of the present invention is, for example, 0.5 to 15 wt%, preferably 1 to 12 wt%, and more preferably 3 to 10 wt%.

When a linear dextrin and a cyclic dextrin are used, the content ratio (weight ratio) between the linear dextrin and the cyclic dextrin is, for example, 20:1 to 2:1, preferably 15:1 to 3:1, and more preferably 12:1 to 5:1.

The solid composition of the present invention may contain a helical dextrin. The DE of helical dextrin used in the present invention is not particularly limited, but is, for example, less than 7, preferably less than 6, and more preferably less than 5. In the case of using a helical dextrin(s), the content of helical dextrin(s) in the solid composition of the present invention is, for example, 0 to 45 wt%, preferably 5 to 30 wt%, and more preferably 10 to 20 wt%. Also, when a helical dextrin is used, the content ratio (weight ratio) between the linear dextrin and the helical dextrin is, for example, 1:3 to 3:1, preferably 1:2 to 2:1, and more preferably 1:1.5 to 1.5:1.

### [Additional aromatic component]

The solid composition of the present invention may further contain, in addition to the above-mentioned 2,6-dimethylpyrazine and maltol, one or more aromatic components selected from the group consisting of 2-methylfuran, furfural, 2,5-dimethylpyrazine, 2,3-dimethylpyrazine, 2,3,5-trimethylpyrazine, 1-hydroxy-2-butanone, 2-ethyl-6-methylpyrazine, 2-ethyl-5-methylpyrazine, 2-ethyl-3,5-dimethylpyrazine, 2-acetylfuran, furfuryl methyl sulfide, and hydroxymethyl furfural. These aromatic components may be included in the solid composition of the present invention to provide a much better sweet and roasty aroma.

In the present invention, the content of 2-methylfuran, furfural, 2,5-dimethylpyrazine, 2,3-dimethylpyrazine, 2,3,5-trimethylpyrazine, 1-hydroxy-2-butanone, 2-ethyl-6-methylpyrazine, 2-ethyl-5-methylpyrazine, 2-ethyl-3,5-dimethylpyrazine, 2-acetylfuran, furfurylmethyl sulfide, or hydroxymethylfurfural in the solid composition may be determined by gas chromatography-mass spectrometry (GC/MS). Specifically, the content of each aromatic component may be measured under the conditions shown in the Examples below. The conditions for each sample for measurement may also be set as indicated in the Examples below.

### (Other Additive)

The solid composition of the present invention may contain an ingredient(s) other than tea. Examples of the other ingredient other than tea include, but are not particularly limited to, baking soda. The content of baking soda in the solid composition of the present invention is, for example, 0.1 to 5 wt%, preferably 0.2 to 3 wt%, and more preferably 0.3 to 2 wt%.

The solid composition of the present invention may contain an antioxidant. Examples of the antioxidant include, but are not particularly limited to, sodium L-ascorbate. The content of antioxidant in the solid composition of the present invention is, for example, 0.5 to 8 wt%, preferably 1 to 6 wt%, and more preferably 1.5 to 4 wt%.

In addition to the various components listed above, additives used for ordinary foods and drinks may be added without departing from the scope of the invention to the solid composition of the present invention, including, for example, a preservative, a pH adjuster, a sweetening agent, a nutrient enhancer, a thickening stabilizer, an emulsifier, dietary fiber, and/or a quality stabilizer.

### (Solid composition)

The solid composition of the present invention is not particularly limited, but it is preferred to be in powder form, i.e., a powdery composition. In the present invention, the powdery composition should be in powder form, including granules. In the present invention, the grain size of the powder composition is not particularly limited, but is, for example, 0.1 to 500 µm, preferably 1 to 300 µm, and more preferably 10 to 200 µm.

The solid composition of the present invention may be included in a food or drink (a beverage and a food). In other words, the present invention can provide a food or drink containing the solid composition described above. Regarding the solid composition of the present invention, this composition is preferably included in a liquid to make a beverage, and it is most preferable to dissolve it in water or hot water and then drink the mixture as a tea beverage. In this regard, it is most preferred that the solid composition of the present invention is provided as an instant tea. As used herein, the term "instant tea" means a powdered beverage made by drying a solution of tea leaf extract as a raw material and including a dextrin(s) and other ingredients to process the mixture into a powder form. Examples of the tea beverage include unfermented tea (e.g., green tea), semi-fermented tea (e.g., oolong tea), and fermented tea (e.g., black tea). Specific examples include: unfermented steamed teas (green teas) such as sencha, bancha, hojicha, gyokuro, kabusecha, and sweet tea; unfermented teas such as Ureshino tea, Aoyagi tea, and pan-fired teas (e.g., various Chinese teas); semi-fermented teas such as Pouchong tea, Tieguanyin tea, and oolong tea; and fermented teas such as black tea, Awa Bancha, and Puerh tea. The tea beverage in which the solid composition of the present invention is used is preferably green tea. In other words, the solid composition of the present invention may be provided as an instant green tea.

When the solid composition of the present invention is included in a liquid such as water or hot water, its content in the solution is not particularly limited, but is, for example, 0.01 to 20 wt%, preferably 0.05 to 10 wt%, and more preferably 0.1 to 5.0 wt%. The content of the solid composition in the solution may be adjusted so that the content of 2,6-dimethylpyrazine in the solution is, for example, 0.1 to 90 ppb, preferably 0.2 to 85 ppb, more preferably 0.3 to 80 ppb, and still more preferably 0.4 to 75 ppb, or the content of maltol in the solution is, for example, 50 to 10000 ppb, preferably 55 to 9500 ppb, more preferably 60 to 9000 ppb, and still more preferably 65 to 8500 ppb.

The solid composition of the present invention may also be added to foods. Examples of such foods include confectioneries (e.g., cakes, sponge cakes, candies, cookies, jellies, puddings, chocolates), frozen desserts (e.g., ice creams, popsicles, sherbets), or snacks regardless of whether such foods are Japanese or Western confectioneries. The solid composition can also be used in bread and dairy products. When the solid composition of the present invention is added to a food, the amount to be added may be set, if appropriate, according to the type of food and other factors.

When the solid composition of the present invention is admixed with a food, the amount to be added may be set, if appropriate, according to the type of food and other factors. The solid composition of the present invention may be added so that its content in the food is, for example, 0.01 to 20 wt%, preferably 0.05 to 10 wt%, more preferably 0.1 to 5.0 wt%, and still more preferably 0.5 to 5.0 wt%.

The amount of the solid composition of the present invention to be added to a food may also be set based on the content of the aromatic components mentioned above. The solid composition of the present invention may be added to a food so that the content of 2,6-dimethylpyrazine in the food is, for example, 0.5 to 500 ppb, preferably 1 to 250 ppb, more preferably 2 to 200 ppb, and still more preferably 3 to 150 ppb. The solid composition of the present invention may be added to a food so that the maltol content in the food is, for example, 0.5 to 10000 ppb, preferably 5 to 9000 ppb, more preferably 10 to 8000 ppb, and more preferably 15 to 7000 ppb.

### (Production method)

The solid composition of the present invention may be produced through step (A) of preparing a solution containing a tea leaf extract, 2,6-dimethylpyrazine, and maltol, and step (B) of drying the resulting solution. In addition to the tea leaf extract, 2,6-dimethylpyrazine, and maltol, the solution may also contain the above-described various components such as dextrin. The amount of each component blended may be set, if appropriate, as long as it does not impair the effects of the present invention, and the order in which the various components are blended is not particularly limited. Meanwhile, water may be used as a solvent for the solution, or the tea leaf extract may be used as it is. In the solution, the weight ratio of the 2,6-dimethylpyrazine content to the maltol content may be 3.3 or less, but it is not limited, and the weight ratio in the final solid composition should be 3.3 or less.

The solution may be dried using a method conventionally known to those skilled in the art. Examples include spray-drying, freeze-drying, hot-air drying, or vacuum drying. However, spray-drying is preferred in the present invention. Note that the conditions (e.g., temperature and time) for spray drying are not particularly limited and may be adjusted as needed.

In the production of the solid composition of the present invention, in addition to the steps described above, a step of concentrating the solution obtained in step (A) and a step of heating the solution obtained in step (A) may be included. Both steps may be implemented using methods conventionally known to those skilled in the art.

### (Method of enhancing sweet and roasty aroma in food or drink)

The solid composition of the present invention as obtained as described above may be added to a food or drink, thereby capable of enhancing a sweet and roasty aroma in the food or drink. Therefore, the present invention can be, in another aspect, a method of enhancing a sweet and roasty aroma in a food or drink, including the step of adding, to the food or drink, the solid composition obtained through the above steps.

### EXAMPLES

Hereinafter, the present invention will be described based on Examples. The present invention, however, is not limited to these Examples.

### (1) Preparation of solid composition (powdery composition)

### (1-1) Tea leaves

Tea leaves were roasted using sencha (autumn-winter flush tea, Marubeni Foods) as a raw material in a drum-type roasting apparatus (Yokoyama Seisakusho; Model DS-2) at a drum rotation speed of 3 r/sec, a temperature of 220°C, and a roasting time of 6 minutes.

### (1-2) Tea leaf extract

To a tea extraction tank were added 16 kg of roasted sencha (autumn-winter flush tea) as described above, 2.38 kg of dextrins (CAVAMAX W6 (α-CD) (α-cyclodextrin): 0.5 kg, Sandec #30 (linear dextrin (weight average molecular weight: 120000, DE: 2 to 5)): 1.88 kg), 0.48 kg of sodium L-ascorbate, and 1.6 kg of KC Flock as a pressing aid as well as 224 kg of hot water at 90°C. The mixture was stirred at 200 rpm and kept for 20 minutes. Subsequently, the extraction residue was collected through a filter cloth for pressing (material: pyrene), and a pressure of 18 MPa was applied to produce a tea leaf extract.

Next, 3.65 kg of dextrin (TK-16 (linear dextrin (DE: 18))) was added to 190 kg of the tea leaf extract obtained, mixed, centrifuged to remove insoluble components (tea leaves), and then sterilized under conditions at 90°C for 30 seconds. After sterilization, the tea leaves extract was concentrated by membrane-mediated enrichment (NTR-759HG-S4F (Nitto Denko), liquid temperature: 20°C, pressure: 3 MPa) so that a Brix value of 20 to 30 would be provided as for the solid content in the solution.

### (1-3) Powdery composition

The tea leaf extract concentrated as described above was sterilized under conditions at 90°C for 45 seconds. After sterilization, the solution was spray-dried using a spray dryer to produce a powdery composition. Note that in terms of the drying conditions, the inlet and outlet hot air temperatures were set to 160°C and 110°C, respectively. The powdery composition thus obtained was referred to as roasty aromatic powder.

### (1-4) Evaluation of powdery composition

In the powdery composition obtained as described above, when this was dissolved in water, a sweet and fragrant, roasty aroma reminiscent of caramel was felt. This powdery composition was analyzed for aromatic components. As a result, maltol, 2,6-dimethylpyrazine, 2-methylfuran, furfural, 2,5-dimethylpyrazine, 2,3-dimethylpyrazine, 2,3,5-trimethylpyrazine, 1-hydroxy-2-butanone, 2-ethyl-6-methylpyrazine, 2-ethyl-5-methylpyrazine, 2-ethyl-3,5-dimethylpyrazine, 2-acetylfuran, furfuryl methyl sulfide, and hydroxymethyl furfural, etc., were detected. Among the various aromatic components, attention was paid to components: maltol and 2,6-dimethylpyrazine, and the concentrations of these components in the powdery composition were measured as follows.

### <Standard curve>

A standard stock solution (ethanol solvent) was prepared such that the concentration of each target aromatic component was 10000 ppm. Each standard stock solution was prepared at 0.001, 0.01, 0.1, 0.5, and 1.0 ppm with pure water. Here, 10 mL of each prepared solution was put into a 20-mL vial containing 3 g of sodium chloride to make a standard curve sample.

### <To produce analyte sample>

The analyte sample was prepared by dissolving 0.8 g of the powdery composition in 100 mL of pure water so that it fell within the concentration range of the standard curve, and by adding 10 mL of the resulting solution and 3 g of sodium chloride to a 20-mL vial. In the analyte samples, 10 µL of borneol prepared at 10 ppm was added as an internal standard.

### <To analyze components>

The concentrations of maltol and 2,6-dimethylpyrazine in the powdery composition were determined using an Agilent gas chromatography analyzer (GC/MS) as follows.

### Analyzer

Instrument: GC:Agilent Technologies 7890B GC
MS: Agilent Technologies 5977A
HS: Gestel MPS

### Pretreatment

Apparatus: MAESTRO 4 by GERSTEL
Method: MVM (no3&FEDHS)
Agitation temperature: 80°C, 30 min
Tube: Tenax TA, Carbon bx1000

### Column:

Type: Agilent 19091N-136I HP-INNOWax
Length: 60 m
Inner diameter: 0.25 mm
Film thickness: 0.25 µm

### Analytical conditions

### Method

Gas flow rate: 54.1 mL/min (total flow at inlet)
1.7 mL/min (constant flow in column)
Temperature rise pattern: initial temperature 70°C (0 min) -> 240°C at a rate of 5°C/min -> post run at 260°C for 10 min
Splitless
Injection volume: 0.2 µL

As a result of the above measurements, the concentrations of maltol and 2,6-dimethylpyrazine in the analyte sample were 234 ppb and 5.6 ppb, respectively.

### (2) Experimental Example 1

First, as the base powdered tea, a powdered tea was prepared that gave the impression of a flat flavor and gave neither a sweet nor roasty aroma sensation. Specifically, to a tea extraction tank were added 15 kg of commercially available sencha (a mixture of first and second flush teas; Marubeni Foods), 3 kg of dextrins (CAVAMAX W6 (α-CD): 0.63 kg, Sandec #30: 2.37 kg), 0.6 kg of tannase, 0.1 kg of baking soda, 0.45 kg of sodium L-ascorbate, and 1.5 kg of KC Flock as a pressing aid as well as 225 kg of warm water at 40°C. The mixture was stirred at 200 rpm and kept for 20 minutes. Subsequently, the extraction residue was collected through a filter cloth for pressing (material: pyrene), and a pressure of 18 MPa was applied to produce a tea leaf extract. Next, 3.54 kg of dextrin (TK-16) (150% relative to the tea solid weight) was added to 173 kg of the tea leaf extract obtained, mixed, centrifuged to remove insoluble components (tea leaves), and then sterilized under conditions at 90°C for 30 seconds. After sterilization, the tea leaves extract was concentrated by membrane-mediated enrichment (NTR-759HG-S4F (Nitto Denko), liquid temperature: 20°C, pressure: 3 MPa) so that a Brix value of 20 to 30 would be provided as for the solid content in the solution. This tea leaf extract concentrated was sterilized under conditions at 90°C for 45 seconds. After sterilization, the solution was spray-dried using a spray dryer to produce a base powdery composition. Note that in terms of the drying conditions, the inlet and outlet hot air temperatures were set to 160°C and 110°C, respectively. The base powdery composition (powdered tea) thus obtained is referred to as flat powder. The concentrations of maltol and 2,6-dimethylpyrazine in the flat powder were examined, and both concentrations were 0 (below detection limit).

Next, the flat powder was mixed with the above-mentioned roasty aromatic powder, and water was added to produce a powdered tea solution. Various samples were prepared by adding maltol and 2,6-dimethylpyrazine standards to the solution obtained by dissolving roasty aromatic powder only, so that the final concentrations of both components were as indicated in the table below.

The various samples prepared were subjected to sensory evaluation by two panelists who were adequately trained for flavor evaluation. The sensory evaluation was graded according to the following criteria for caramel-like sweet and roasty sensation in each sample. The evaluation scores were given points by increments of 0.5, and the evaluation scores were finally averaged. Note that regarding the results of the sensory evaluation, the panelists' evaluation scores did not differ by 1.5 points or more from each other.
1: No sweet-roasty aroma sensation
2: A hint of sweet-roasty aroma sensation
3: A slight sweet-roasty aroma sensation
4: A sweet-roasty aroma sensation
5: A strong sweet-roasty aroma sensation

**[Table 1]**

| | Sample | | | | | | |
|---|---|---|---|---|---|---|---|
| | 1-1 | 1-2 | 1-3 | 1-4 | 1-5 | 1-6 | 1-7 |
| Flat powder [g] | 1 | 0.8 | 0.5 | 0.2 | 0 | 0 | 0 |
| Roasty aromatic powder [g] | 0 | 0.2 | 0.5 | 0.8 | 1 | 1 | 1 |
| Water [g] | 100 | 100 | 100 | 100 | 100 | 100 | 100 |
| Maltol [ppb] | 0 | 58.5 | 146.3 | 234.0 | 292.5 | 400.0 | 800.0 |
| 2,6-Dimethylpyrazine [ppb] | 0 | 1.4 | 3.5 | 5.6 | 6.9 | 9.6 | 19.2 |
| Evaluation results | 1 | 2.5 | 3.25 | 4 | 5 | 5 | 5 |

The above results have demonstrated that the presence of 2,6-dimethylpyrazine and maltol gave a caramel-like sweet and roasty aroma sensation.

### (3) Experimental Example 2

The effect of the weight ratio of the 2,6-dimethylpyrazine content to the maltol content (2,6-dimethylpyrazine/maltol) was investigated using the roasty aromatic powder prepared as described above.

First, 100 mL of water was added to 1 g of roasty aromatic powder to produce a solution obtained by dissolving the roasty aromatic powder. Various samples were prepared by adding maltol and 2,6-dimethylpyrazine standards to the solution, so that the final concentrations of both components were as indicated in the table below.

The various samples prepared were subjected to sensory evaluation by two panelists who were adequately trained for flavor evaluation. The sensory evaluation was graded according to the following criteria for caramel-like sweet and roasty sensation in each sample. The evaluation scores were given points by increments of 0.5, and the evaluation scores were finally averaged. Note that regarding the results of the sensory evaluation, the panelists' evaluation scores did not differ by 1 point or more from each other.
- 1:: No sweet-roasty aroma sensation
- 2:: A hint of sweet-roasty aroma sensation
- 3:: A slight sweet-roasty aroma sensation
- 4:: A sweet-roasty aroma sensation
- 5:: A strong sweet-roasty aroma sensation

**[Table 2]**

| | Sample | | | | | | | | |
|---|---|---|---|---|---|---|---|---|---|
| | 2-1 | 2-2 | 2-3 | 2-4 | 2-5 | 2-6 | 2-7 | 2-8 | 2-9 |
| Roasty aromatic powder [g] | 1 | 1 | 1 | 1 | 1 | 1 | 1 | 1 | 1 |
| Water [g] | 100 | 100 | 100 | 100 | 100 | 100 | 100 | 100 | 100 |
| Maltol [ppb] | 0 | 800.0 | 800.0 | 800.0 | 292.5 | 292.5 | 292.5 | 292.5 | 292.5 |
| 2,6-Dimethylpyrazine [ppb] | 0 | 6.9 | 10.0 | 19.0 | 6.9 | 30.0 | 150.0 | 400.0 | 1000.0 |
| 2,6-Dimethylpyrazine/Maltol | 0 | 0.009 | 0.013 | 0.024 | 0.024 | 0.103 | 0.513 | 1.367 | 3.418 |
| Evaluation results | 1 | 3.75 | 4.25 | 4.5 | 5 | 4.75 | 4.25 | 3.25 | 1.75 |

The above results have demonstrated that the sweet and roasty caramel-like aroma can be perceived when the weight ratio of the 2,6-dimethylpyrazine content to the maltol content (2,6-dimethylpyrazine/maltol) is within the specified range.

## Claims

1. A solid composition comprising 2,6-dimethylpyrazine and maltol, wherein a weight ratio of a 2,6-dimethylpyrazine content to a maltol content is 3.3 or less.

2. The composition according to claim 1, which is a powdery composition.

3. The composition according to claim 1, comprising two or more types of dextrins.

4. The composition according to claim 3, comprising a linear dextrin and a cyclic dextrin.

5. The composition according to claim 1, comprising a tea leaf extract.

6. The composition according to claim 5, wherein the tea leaf extract is a tea leaf extract of green tea.

7. The composition according to claim 1, comprising an ingredient other than tea.

8. The composition according to claim 1, comprising an antioxidant.

9. A food or drink comprising the composition according to any one of claims 1 to 8.

10. The food or drink according to claims 9, which is a beverage.

11. The food or drink according to claims 9, which is a tea beverage.
